# EUROPEAN PATENT SPECIFICATION

(11) **EP 0 316 485 B1**
(45) Date of publication and mention of the grant of the patent: **24.02.1993**
(21) Application number: 87310082.0
(22) Date of filing: 16.11.1987
(51) Int. Cl.: F16F 15/30, F16H 33/08

(54) **A rotor device**
Rotoranordnung
Dispositif à rotor

(43) Date of publication of application: 24.05.1989
(73) Proprietor: Hashizume, Akio, Edogawa-ku Tokyo (JP); Hashizume, Yasuyoshi, Edogawa-ku Tokyo (JP)
(72) Inventor: Hasizume, Akio, Edogawa-ku, Tokyo, (JP)
(74) Representative: Jones, Michael Raymond

(56) References cited:
- DE-A- 2 914 642
- US-A- 1 632 696
- US-A- 2 564 211
- US-A- 4 498 357

## Description

The present invention relates to a rotor for a drive device that can efficiently transmit energy from a drive source with minimal energy loss.

Where a large inertial torque is required with a turbine for a generator known in the prior art, the diameter of the flywheel is made larger or the revolution rate is increased.

However, increasing the flywheel diameter results in a larger scale of the equipment, resulting in a higher manufacturing cost. An increase in the revolution rate consumes more energy and is not desired in view of safety.

The object of the present invention is to provide a rotor for a drive device that can efficiently transmit energy from a drive source with minimal energy loss, without the need of large scale equipment, in a safe and low-cost manner.

According to the present invention, there is provided a rotor device as defined in claim 1.

The present invention will now be described, by way of example, with reference to the drawings in which:
Fig. 1 illustrates the relationship between the output part and the rotor part of a rotor of the invention;
Fig. 2 is a drawing illustrating the operation of a rotor of the invention;
Fig. 3 is an enlarged oblique view of important parts of a rotor of the invention;
Fig. 4 shows an enlarged sectional view of important parts of a rotor of the invention;
Fig. 5 is an exploded view of important parts of a rotor of the invention;
Fig. 6 shows an enlarged section of the crank body; and
Fig. 7 is a sectional view of Fig. 6 along line VII - VII.

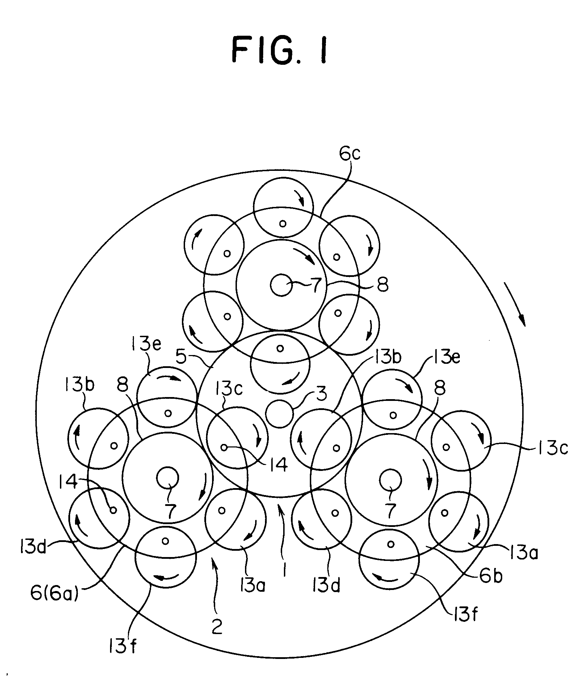

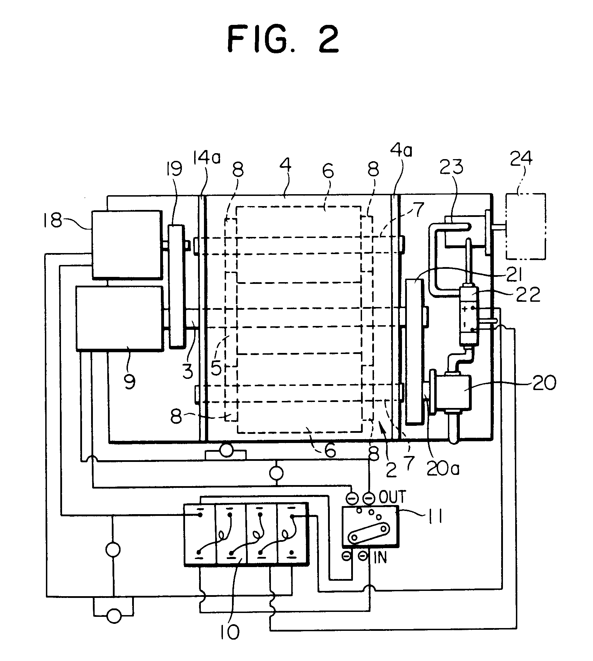

Referring to Figs. 1 and 2, a rotor of the present invention comprises an output part 1 and a rotor part 2. The output part 1 and rotor part 2 are enclosed in a casing 4 whose interior is maintained in vacuum.

First, the detailed structure of the output part 1 is described.

An output shaft (main shaft) 3 is supported by two side plates 4a of the casing 4 of the rotor part 2, in a freely rotating and bearing manner. Two transmission gears 5 are fixed on the output shaft 3. The ends of the output shaft 3 protrude outwardly from the side plates 4a. A DC motor 9 is connected to one shaft end. The motor 9 is connectable to and disconnectable from the output shaft according to the revolution rate of the output shaft 3 by using a built-in control means for connection/disconnection. The control means functions to disconnect the output shaft 3 from the motor 9 when the revolution rate of the output shaft 3 exceeds a predetermined revolution rate, while continuing the connection where the revolution rate is lower than the predetermined rate.

Next, the detailed structure of the rotor part is described.

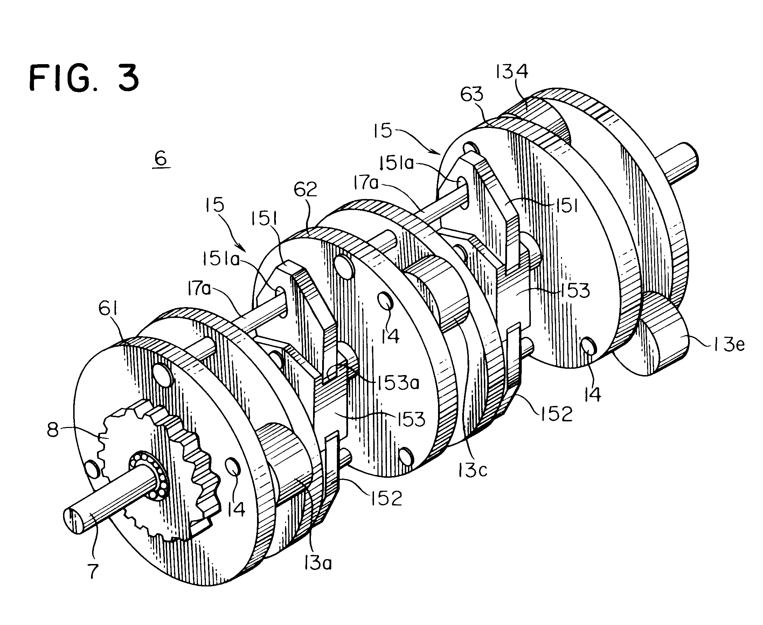

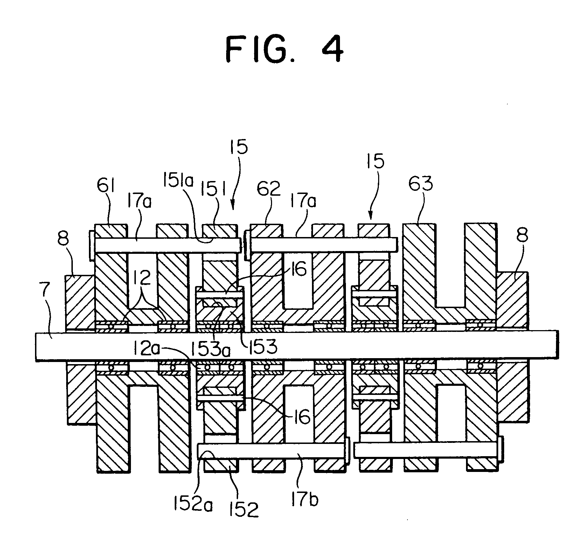

Referring to Fig. 1, the rotor part comprises three rotor bodies 6 (i.e. three rotor bodies 6a, 6b and 6c) arranged at intervals of 120 degrees around the centre of the output shaft 3. Each rotor body 6 consists of three rotatable body members 61, 62 and 63. Extending through the shaft centre of each rotor body 6, there is a support shaft 7. Each support shaft 7 is equipped with two transmission gears 8 each freely rotatable. These transmission gears 8 engage with the transmission gears 5 of the output shaft 3. Each transmission gear 8 is fixed by screwing (not illustrated) on the side face of the rotatable body member 61 or 63 (Figs. 3 and 4) of the rotor body 6.

The motor 9 is connected to a battery 10 via a DC switch 11.

Each support shaft 7 is a fixed axis. The three rotatable body members 61, 62 and 63, constituting each rotor body 6, are freely rotatably mounted in the axial direction on each support shaft 7 as shown in Figs. 3 to 5 via bearings 12. The section of each rotatable body member 61 to 63 is formed as a letter "H". In the interior of each rotatable body member, flywheels 13a, 13b, 13c, 13d, 13e and 13f are provided, pairs thereof being diagonally opposite each other. Each flywheel 13a to 13f is equipped with a rotating centre in the form of a pin 14 in the outer periphery of the respective rotatable body member 61 to 63. The pin 14 is located away from the centre of the flywheels 13a to 13f, namely at an eccentric position, so that a part of each flywheel protrudes outwardly from the outer periphery of the respective rotatable body member 61 to 63 when the body member is rotating. The flywheels 13a to 13f are arranged, as shown in Fig. 1, so that they are located around the support shaft 7 at equal intervals.

Two crank bodies 15 are mounted on each support shaft 7 via bearings 12a in the sides of the rotatable body members 61 to 63 on each support shaft 7.

The drive torque of the output shaft 3 is transmitted to the transmission gears 8 on each support shaft 7 from the transmission gear 5, and the rotational power of the transmission wheel 8 is transmitted to the rotatable body member 61 or 63, whereby the rotatable body members 61 and 63 rotate. The rotational power of the rotatable body members 61 and 63 is transmitted to the crank bodies 15 adjacently located on the right and left sides of the rotatable body members, by a connecting pin 17a. As a result, each crank body revolves. The rotational power of the crank bodies is transmitted to the rotatable body member 62 which is located at the centre through connecting pins 17a and 17b, and the rotatable body member 62 rotates. As above mentioned, the central rotatable body member 62 and the right and left adjacent crank bodies 15 rotate in response to the rotation of the rotatable body members 61 and 62 positioned on the two sides of the central rotatable body member 62.

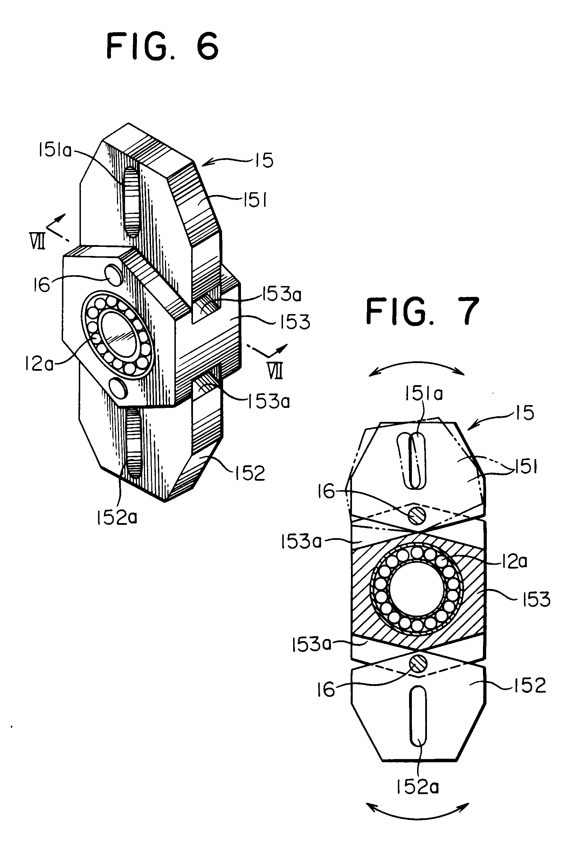

In the course of the rotation of the crank bodies 15, the connecting pins 17a and 17b move within elongated holes 151a and 152a provided in upper and lower crank plates 151 and 152 that are held by the crank body. In other words, during the above-mentioned process, the upper and lower crank plates 151 and 152 move in a swinging manner around the centre of a pin 16 penetrating a groove 153a provided in a central support body 153, as indicated by a chain line in Fig. 7. As a result, this mechanism prevents the continuation of the state where the flywheels 13a to 13f protrude outwardly from the outer periphery of the rotatable body members 61 to 63.

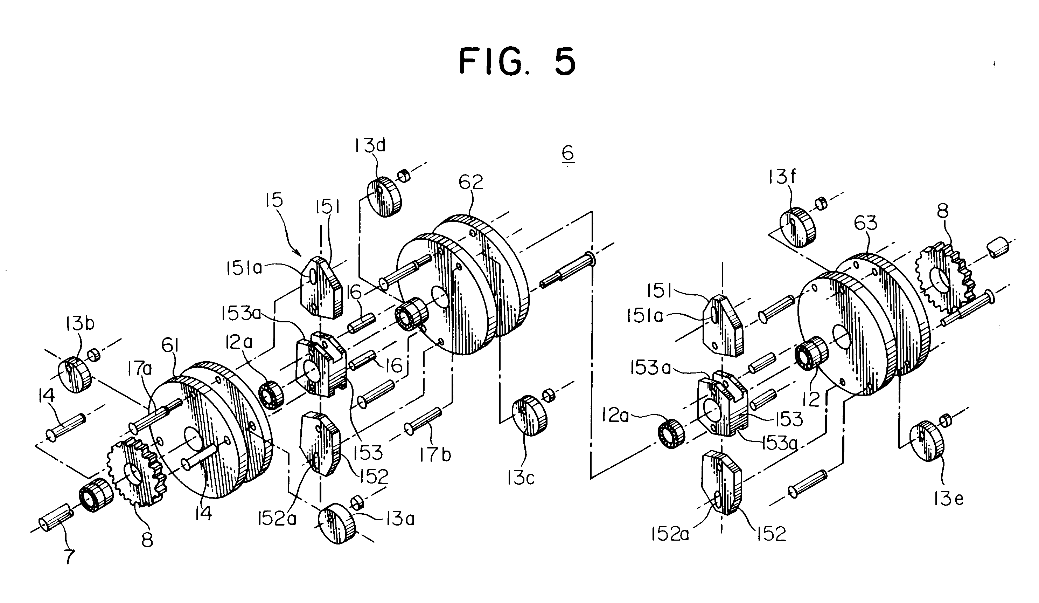

Thus, the crank body 15 prevents the continuation of a state where, due to centrifugal force, the flywheels 13a to 13f protrude outwardly from the outer peripheries of the rotatable body members 61 to 63 during their rotation. For this purpose, the crank body holds the upper and lower crank plates 151 and 152 in a freely swinging manner at a centre of the pin 16 within the groove 153a of the central support body 153, as shown in Figs. 5 to 7. The inner end of each crank plate 151 and 152 is cut in a ridge shape. The section of the bottom of the groove 153a in the support body 153 is also shaped in a ridge. The outer ends of the upper and lower crank plates 151 and 152 are drilled with the elongated holes 151a and 152a in the up/down direction. Referring to Fig. 4, the upper elongated hole 151a is penetrated by a connecting pin 17a that extends from the left adjacent rotatable body member 61, in a movable manner. The connecting pin 17b, also movable, extends from the right adjacent rotatable body member 62, and penetrates the lower elongated hole 152a. Therefore, each crank body 15 is activated by the rotation of the rotatable body members 61 or 63. The swing width of the upper or lower crank plate 151 or 152 becomes smaller as the angle of inner end of each upper or lower crank plate 151 or 152, or the top angle of the bottom of the groove 153a in the support body 153, is larger.

Referring to Fig. 2, a timing belt 19 is hung between one side of the output shaft 3 and a generator 18. The generator 18 is electrically connected to the battery 10. The generator 18 generates power by the rotation of the output shaft 3 for charging the battery 10 to compensate for power consumption.

To compensate for power consumption by the battery 10, the battery 10 is charged by an external energy source (not shown).

A belt 21 is hung between the other side of the output shaft 3 and a shaft 20a of a hydraulic pump 20. Drive power from the hydraulic pump 20 is transmitted to a hydraulic motor 23 via a solenoid valve 22, and then to a generator 24.

The operation of the rotor of the present invention is as follows. The rotational power of the motor 9 is transmitted from the output shaft 3 to the rotatable body members 61 and 63 of each rotor body 6, through the transmission gears 5 and 8, as shown in Fig. 1.

Thus, the drive torque of the output shaft 3 is transmitted to the transmission gears 8 from the transmission gears 5, and the rotational power of the transmission gears 8 is transmitted to the rotatable body members 61 and 63 of each rotor body 6, whereby the rotatable body members 61 and 63 rotate. The rotational power of the rotatable body members 61 and 63 is transmitted to the crank bodies 15 adjacently located on the right and left sides of the rotatable body members by the connecting pin 17a. As a result, each crank body revolves. The rotational power of the crank bodies is transmitted to the rotatable body member 62 which is located at the centre through the connecting pins 17a and 17b, whereby the rotatable body member 62 and the right and left adjacent crank bodies 15 rotate in response to the rotation of the rotatable body members 61 and 63 positioned on both sides of the central rotatable body member 62.

In the course of the rotation of the crank bodies 15, the connecting pins 17a and 17b move within the elongated holes 151a and 152a provided in the upper and lower crank plates 151 and 152 that are held by the crank body. In other words, during the above-mentioned process, the upper and the lower crank plates 151 and 152 move in a swinging manner about the centre of the pin 16 penetrating the groove 153a provided in the central support body 153, as indicated by a chain line in Fig. 7.

The flywheels 13a to 13f eccentrically rotate around pins 14 as the rotatable body members 61 to 63 revolve in each rotor body. Parts of the flywheels 13a to 13f protrude from the outer periphery of the rotatable body members 61 to 63 (Fig. 1) by the centrifugal force created by the high-speed rotation of the rotatable body members 61 to 63, and attempt to continue in such a protruded state. However, the upper and lower crank plates 151 and 152 swing to destroy the balance between them, as the crank body 15 continues to rotate. Therefore, the protrusion of the flywheels 13a to 13f can no longer continue. Consequently, each rotor body 6 is accelerated by the presence of the flywheels 13a to 13f and the vacuum in the casing 4, whereby the acceleration is transmitted to the output shaft 3. When the revolution rate of the output shaft 3 exceeds a predetermined rate, the control means is actuated to terminate the connection thereof to the motor 9. When the revolution rate of the output shaft 3 decreases below the specified rate, the drive force of the motor 9 is transmitted again to the output shaft 3. As the output shaft 3 rotates, generators 24 and 18 shown in Fig. 2 start to generate power.

Where a rotational input is applied to the output shaft 3 from an external source, the output shaft 3 rotates and, as the transmission gears 5 and 8 also rotate at the same time, the rotors bodies 6 and the rotatable body members 61 to 63 also rotate. When the rotatable body members 61 to 63 rotate, the flywheels 13a to 13f revolve. Therefore, the flywheels 13a to 13f prevent a part of the flywheels 13a to 13f from continuing to protrude outwardly from the rotating body members 61 to 63.

The flywheels 13a to 13f are mounted on the rotatable body members 61 to 63 at an eccentric position by pins 14, and can freely revolve around the centres of the pins 14. As shown in Fig. 1, part of each flywheel 13a to 13f is protrudable outwardly from the outer periphery of the respective rotatable body member 61, 62 or 63.

The direction of inertial torque is in a circumferential direction in the case where the rotor bodies 6 (i.e. the rotatable body members 61 to 63) rotate in the direction indicated by arrows (counter-clockwise direction) in Fig. 1.

The range of applications of the rotor of the present invention is wide, e.g. as the rotor of a generator, as an engine, as a motor for a hydraulic press, etc. For example, where the rotor of the present invention is applied to a hydraulic press a large pushing force is obtained with a small input.

It is preferable to maintain a vacuum in the casing 4, with a view to accelerating rotor bodies 6 more quickly and to maintaining a high-speed rotation of the same.

The shape of the flywheels 13a to 13f is not limited to the shape described above.

## Claims

1. A rotor device for storing and delivering rotational energy, comprising:-
(i) a main shaft (3) having a first transmission gear (5) drivingly connected thereto; and
(ii) a plurality of rotor bodies (6) each having a second transmission gear (8) engaged with said first transmission gear (5), each of said rotor bodies (6) comprising:-
(a) a support shaft (7) whose axis is fixed with respect to the axis of said main shaft (3);
(b) a plurality of axially spaced rotatable body members (61, 62, 63) rotatably mounted on said support shaft (7) and to a first (61 or 63) of which the second transmission gear (8) is drivingly connected;
(c) a plurality of flywheels (13a to 13f) on each rotatable body member (61, 62, 63), each flywheel having an eccentrically located pin (14), said pin (14) being rotatably mounted on an outer peripheral portion of the respective rotatable body member (61, 62, 63) such that said flywheels (13a to 13f) are rotatable relative to said rotatable body members (61, 62, 63);
(d) crank means (15) rotatably mounted on said support shaft (7) between said first rotatable body member (61 or 63) and its neighbouring rotatable body member (62), said crank means (15) comprising a crank body (153) and two diametrically opposed crank plates (151, 152) pivotably mounted on said crank body (153), said crank plates (151, 152) having elongated holes (151a, 152a);
(e) a first connecting pin (17a) connected to said first rotatable body member (61 or 63) disposed on one axial side of said crank means (15) and extending into the elongated hole (151a) of one crank plate (151); and
(f) a second connecting pin (17b) connected to said neighbouring rotatable body member (62) located on the other axial side of said crank means (15) and extending into the elongated hole (152a) of the other diametrically opposed crank plate (152).

2. A rotor according to claim 1, wherein said flywheels (13a to 13f) have a generally cylindrical configuration, said cylindrically configured flywheels (13a to 13f) having a geometric centre, said eccentrically located pin (14) being spaced from said geometric centre.

3. A rotor device according to claim 1 or 2, wherein each of said rotatable body members (61, 62, 63) comprises two axially spaced body sections, said flywheels (13a to 13f) being pivotably mounted between said two axially spaced body sections.

4. A rotor device according to claim 3, wherein each of said rotatable body members (61, 62, 63) has a generally H-shaped cross sectional configuration taken along an axial cutting plane.

5. A rotor device according to any of claims 1 to 4, wherein said crank means (15) comprises crank pivot pins (16) for pivotably supporting said crank plates (151, 152) on said crank body (153), said crank pivot pins (16) being located radially outwardly from the axis of said support shaft (7).

6. A rotor device according to any of claims 1 to 5, wherein said elongated holes (151a, 152a) are elongated in a diametric direction relative to the axis of said support shaft (7).

7. A rotor device according to any of claims 1 to 6, wherein there are three of said rotor bodies (6a, 6b, 6c) disposed about said main shaft (3), said main shaft (3) and said support shafts (7) being parallel to one another.

## Patentansprüche

1. Eine Rotoranordnung zum Speichern und Abgeben von Rotationsenergie, mit:-
(i) einer Hauptwelle (3), mit der ein erstes Getriebezahnrad (5) drehfest verbunden ist; und
(ii) mehreren Rotorkörpern (6), deren jeder ein zweites Getriebezahnrad (8) aufweist, das mit dem ersten Getriebezahnrad (5) im Eingriff steht, wobei jeder Rotorkörper (6) umfaßt:-
(a) eine Stützachse (7), deren Längsmittellinie bezüglich der Längsmittellinie der Hauptwelle (3) ortsfest angeordnet ist;
(b) mehrere mit gegenseitigem axialen Abstand angeordnete, drehbar auf der Stützachse (7) angebrachte Rotationskörperteile (61,62,63), von denen ein erstes (61 oder 63) mit dem zweiten Getriebezahnrad (8) in Antriebsverbindung steht;
(c) mehrere Schwungräder (13a bis 13f) an jedem Rotationskörperteil (61,62,63), wobei jedes Schwungrad einen exzentrisch angeordneten Stift (14) aufweist, welcher Stift (14) drehbar an einem äußeren Umfangsbereich des jeweiligen Rotationskörperteils (61,62,63) so angebracht ist, daß die Schwungräder (13a bis 13f) relativ zu den Rotationskörperteilen (61,62,63) drehbar sind;
(d) eine Kurbelanordnung (15), die drehbar auf der Stützachse (7) zwischen dem ersten Rotationskörperteil (61 oder 63) und seinem benachbarten Rotationskörperteil (62) angebracht ist, wobei die Kurbelanordnung (15) einen Kurbelkörper (153) und zwei diametral gegenüberliegende Kurbelplatten (151,152) umfaßt, die drehbar am Kurbelkörper (153) angebracht sind, wobei die Kurbelplatten (151,152) Langlöcher (151a,152a) aufweisen;
(e) einen ersten Verbindungsstift (17a), der mit dem an einer axialen Seite der Kurbelanordnung (15) angeordneten ersten Rotationskörperteil (61 oder 63) verbunden ist und sich bis in das Langloch (151a) einer Kurbelplatte (151) hineinerstreckt; und
(f) einen zweiten Verbindungsstift (17b), der mit dem benachbarten, an der anderen axialen Seite der Kurbelanordnung (15) angeordneten Rotationskörperteil (62) verbunden ist und sich bis in das Langloch (152a) der anderen, diametral gegenüberliegenden Kurbelplatte (152) hineinerstreckt.

2. Eine Rotoranordnung nach Anspruch 1, in welcher die Schwungräder (13a bis 13f) eine allgemein zylindrische Form aufweisen, wobei diese zylindrisch geformten Schwungräder (13a bis 13f) einen geometrischen Mittelpunkt aufweisen, und der exzentrisch angeordnete Stift (14) mit Abstand von diesem geometrischen Mittelpunkt angeordnet ist.

3. Eine Rotoranordnung nach Anspruch 1 oder 2, in welcher jedes der Rotationskörperteile (61,62,63) zwei mit gegenseitigem axialen Abstand angeordnete Körperelemente umfaßt, wobei die Schwungräder (13a bis 13f) drehbar zwischen den zwei mit gegenseitigem axialen Abstand angeordneten Körperelementen angebracht sind.

4. Eine Rotoranordnung nach Anspruch 3, in welcher jedes der Rotationskörperteile (61,62,63) eine im Schnitt entlang einer axialen Schnittebene allgemein H-förmige Konfiguration aufweist.

5. Eine Rotoranordnung nach wenigstens einem der Ansprüche 1 bis 4, in welcher die Kurbelanordnung (15) Kurbeldrehzapfen (16) zur drehbaren Lagerung der Kurbelplatten (151,152) am Kurbelkörper (153) umfaßt, wobei die Kurbeldrehzapfen (16) radial außerhalb der Längsmittellinie der Stützachse (7) angeordnet sind.

6. Eine Rotoranordnrnng nach wenigstens einem der Ansprüche 1 bis 5, in welcher die Langlöcher (151a, 152a) in einer diametrischen Richtung relativ zur Längsmittellinie der Stützachse (7) langgestreckt sind.

7. Eine Rotoranordnung nach wenigstens einem der Ansprüche 1 bis 6, in welcher drei um die Hauptwelle (7) herum angeordnete Rotorkörper (6a,6b,6c) vorgesehen sind, wobei die Hauptwelle (3) und die Stützachsen (7) parallel zueinander sind.

## Revendications

1. Dispositif de rotor pour stocker et délivrer une énergie de rotation, comprenant :
(i) un arbre principal (3) comportant un premier pignon de transmission (5) qui lui est connecté de façon entraînante ; et
(ii) une pluralité de corps de rotor (6) dont chacun comporte un second pignon de transmission (8) engréné avec ledit premier pignon de transmission (5), chacun desdits corps de rotor (6) comprenant :
(a) un arbre de support (7) dont l'axe est fixe par rapport à l'axe dudit arbre principal (3) ;
(b) une pluralité d'éléments de corps tournants espacés axialement (61, 62, 63) montés à rotation sur ledit arbre de support (7), le second pignon de transmission (8) étant connecté de façon entraînante à un premier (61 ou 63) des éléments de corps tournants :
(c) une pluralité de volants (13a à 13f) positionnés sur chaque élément de corps tournant (61, 62, 63), chaque volant comportant un axe support disposé de façon excentrique (14), ledit axe support (14) étant monté à rotation sur une partie périphérique externe de l'élément de corps tournant respectif (61, 62 63) de telle sorte que lesdits volants (13a à 13f) puissent tourner par rapport auxdits éléments de corps tournants (61, 62, 63) ;
(d) un moyen de manivelle (15) monté à rotation sur ledit arbre de support (7) entre ledit premier élément de corps tournant (61 ou 63) et son élément de corps tournant voisin (62), ledit moyen de manivelle (15) comprenant un corps de manivelle (153) et deux plaques de manivelle diamétralement opposées (151, 152) montées de façon pivotante sur ledit corps de manivelle (153), lesdites plaques de manivelle (151, 152) comportant des trous allongés (151a, 152a) ;
(e) un premier axe de connexion (17a) connecté audit premier élément de corps tournant (61 ou 63), disposé sur un côté axial dudit moyen de manivelle (15) et s'étendant dans le trou allongé (151a) d'une plaque de manivelle (151) ; et
(f) un second axe de connexion (17b) connecté audit élément de corps tournant voisin (62) disposé sur l'autre côté axial dudit moyen de manivelle (15) et s'étendant dans le trou allongé (152a) de l'autre plaque de manivelle diamétralement opposée (152).

2. Dispositif de rotor selon la revendication 1, dans lequel lesdits volants (13a à 13f) présentent une configuration générale cylindrique, lesdits volants configurés de façon cylindrique (13a à 13f) comportant un centre géométrique, ledit axe support disposé de façon excentrique (14) étant espacé dudit centre géométrique.

3. Dispositif de rotor selon la revendication 1 ou 2, dans lequel chacun desdits éléments de corps tournants (61, 62, 63) comprend deux sections de corps espacées axialement, lesdits volants (13a à 13f) étant montés de façon pivotante entre lesdites deux sections de corps espacées axialement.

4. Dispositif de rotor selon la revendication 3, dans lequel chacun desdits éléments de corps tournants (61, 62, 63) présente une configuration en coupe de forme générale en H, la coupe étant prise selon un plan de coupe axiale.

5. Dispositif de rotor selon l'une quelconque des revendications 1 à 4, dans lequel ledit moyen de manivelle (15) comprend des axes de pivotement de manivelle (16) pour supporter de façon pivotante lesdites plaques de manivelle (151, 152) sur ledit corps de manivelle (153), lesdits axes de pivotement de manivelle (16) étant disposés radialement à l'extérieur par rapport à l'axe dudit arbre de support (7).

6. Dispositif de rotor selon l'une quelconque des revendications 1 à 5, dans lequel lesdits trous allongés (151a, 152a) sont allongés suivant une direction diamétrale par rapport à l'axe dudit arbre de support (7).

7. Dispositif de rotor selon l'une quelconque des revendications 1 à 6, dans lequel il y a trois desdits corps de rotor (6a, 6b, 6c) disposés autour dudit arbre principal (3), ledit arbre principal (3) et lesdits arbres de support (7) étant parallèle les uns aux autres.
